# EUROPEAN PATENT SPECIFICATION

(11) **EP 4 238 804 B1**
(45) Date of publication and mention of the grant of the patent: **04.12.2024**
(21) Application number: 22160164.4
(22) Date of filing: 04.03.2022
(51) Int. Cl.: B60K 35/10, B60K 35/80, B60W 50/08, B60W 40/08

(54) **USER INFORMATION SYSTEM FOR A DRIVER ASSISTANCE SYSTEM, DRIVER ASSISTANCE SYSTEM, DRIVER ASSISTANCE MODULE AND METHOD FOR PROVIDING A USER INFORMATION ABOUT A DRIVER ASSISTANCE SYSTEM**
BENUTZERINFORMATIONSSYSTEM FÜR EIN FAHRERASSISTENZSYSTEM, FAHRERASSISTENZSYSTEM, FAHRERASSISTENZMODUL UND VERFAHREN ZUM BEREITSTELLEN VON BENUTZERINFORMATIONEN ÜBER EIN FAHRERASSISTENZSYSTEM
SYSTÈME D'INFORMATIONS D'UTILISATEUR POUR UN SYSTÈME D'AIDE AU CONDUCTEUR, SYSTÈME D'AIDE AU CONDUCTEUR, MODULE D'AIDE AU CONDUCTEUR ET PROCÉDÉ POUR FOURNIR DES INFORMATIONS D'UTILISATEUR RELATIVES À UN SYSTÈME D'AIDE AU CONDUCTEUR

(43) Date of publication of application: 06.09.2023
(73) Proprietor: Volvo Car Corporation, 40531 Göteborg (SE)
(72) Inventor: LÖKHOLM, Andreas, 40531 Göteborg (SE); RUNHÄLL, Andreas, 40531 Göteborg (SE); APPLEHULT, Christian, 40531 Göteborg (SE)
(74) Representative: Maiwald GmbH

(56) References cited:
- US-A1- 2016 068 158
- US-A1- 2018 173 230

## Description

The present invention relates to a user information system for a driver assistance system of a vehicle.

Additionally, the present invention is directed to a driver assistance system for a vehicle, a driver assistance module and a method for providing a user information about a driver assistance system of a vehicle to a user of the vehicle.

Modern vehicles comprise a plurality of driver assistance systems, e.g. a collision warning system, a braking assistance system, an autonomous emergency braking system, an evasive manoeuver assist system, a lane keeping assistance system, a lane departure warning system, an emergency lane keeping system and/or an autonomous driving system.

These driver assistance systems operate at least with a certain autonomy. Moreover, these driver assistance systems usually intervene and influence a driving behavior of the vehicle without notifying the driver beforehand. Consequently, a user of the vehicle, e.g. a driver, may be surprised if the driving behavior is altered due to an intervention of a driver assistance system. Such a surprise may at least temporarily lead to reduced attention of the driver. The accumulation of such surprises may reduce the confidence that a driver has in the accurate functioning of the vehicle. This may lead to a driving behavior which is hardly foreseeable by other traffic participants.

It is an objective of the present invention to at least mitigate such effects. In other words, driving safety shall be enhanced by improving the driver attention to the traffic and by strengthening the confidence that the driver has in the functioning of the driver assistance systems.

Moreover, US 2016/068158 A1 discloses an automatic park and reminder system and a method of use. This system is configured to remind a driver to enable or activate the parking assist system. This document discloses a user information system for a driver assistance system of a vehicle, comprising
- a first communication interface being configured for receiving event history data from the driver assistance system,
- a user information generation unit being communicatively connected to the first communication interface and being configured for generating a user information based on the event history data received via the first communication interface, and
- a second communication interface being communicatively connected to the user information generation unit and being configured for providing the user information to a user or to an output device.

The problem is at least partially solved or alleviated by the subject matter of the independent claims of the present invention, wherein further embodiments are incorporated in the dependent claims.

According to the subject-matter of claim 1, there is provided a user information system for informing a user about past interventions of a driver assistance system of a vehicle. The user information system comprises a first communication interface being configured for receiving event history data from the driver assistance system. Moreover, the user information system has a user information generation unit being communicatively connected to the first communication interface and being configured for generating a user information based on the event history data received via the first communication interface. The user information comprises at least one of a name of the driver assistance system that has been used, a time and date when the driver assistance system has been used, and a list of one or more conditions that have been met for triggering the driver assistance system. Additionally, the user information system comprises a second communication interface being communicatively connected to the user information generation unit and being configured for providing the user information to a user or to an output device, wherein the user information is provided only after the event has occurred. Consequently, the driver and other users of the vehicle are able to understand why such an intervention has happened and which conditions were met for the driver assistance system to trigger an intervention. The user is, thus, in a position to understand why the intervention has happened. Consequently, he or she will be less surprised if such an intervention happens again. The driver can concentrate his or her attention on the traffic and a level of confidence in the vehicle is enhanced. This leads to a safe and secure operation of the vehicle.

In an embodiment, the user information is provided to the user only if the vehicle is at a standstill.

In an illustrative embodiment, a user may experience an intervention of a driver assistance system without understanding the reasons which have led to this intervention. Consequently, the user may think that the vehicle does not work properly, i.e. have very low confidence in its functioning. In such a situation the user will not be able to drive the vehicle as expected by other traffic participants. This may lead to safety issues.

Additionally or alternatively, information on the general functionality of the respective driver assistance system may be provided to the user as a part of the user information. Alternatively or additionally, statistics on the operation of the respective driver assistance system may be provided. Such statistics may for example comprises an information on how often the driver assistance system has been used during a certain period of time, e.g. a week or a month.

In an embodiment, the user information is generated by selecting the data elements of the event history data which are to be provided to the user, e.g. via a display.

In an embodiment, the user information system may comprise a third communication interface being communicatively connected to the user information generation unit and being configured for receiving a user feedback. Thus, via the third communication interface the user can provide a feedback on a past intervention of a driver assistance system. Such a feedback can be either used directly for adjusting individual user settings in the respective driver assistance system. Consequently, the operation of the driver assistance system is adapted to the expectations and requirements of the user. Additionally or alternatively, the feedback can be used when further generations of the driver assistance system are developed, i.e. for improving further generations of driver assistance systems.

The user feedback may be provided as a free text and/or as answers to predefined multiple choice questions. The user feedback may also be provided by a voice recording. It is possible to provide the feedback via an in-vehicle installation or via a device that does not form part of the vehicle, but is connected thereto, e.g. a mobile electronic device being communicatively connected to the vehicle, such as a smart phone or a tablet. It is understood that the smart phone or tablet runs an appropriate app.

In an embodiment, the user information system may comprise a feedback storage unit for storing user feedback received via the third communication interface. Consequently, the feedback storage unit can be read during a service review of the vehicle. In such a case, the feedback storage unit may comprised a developer interface for reading out the storage. As has already been explained above, the user feedback can be used in the development of new driver assistance systems, which are improved thereby.

In an embodiment, the user information system may comprise a user feedback input device being communicatively connected to the third communication interface. The user feedback input device may form a part of the vehicle. Alternatively, the user feedback input device may not form part of the vehicle, but may be communicatively connected to the vehicle. In the latter case the user feedback input device is a mobile electronic device such as a smart phone or a tablet. In both cases, the user has a simple means for providing his or her feedback. It is understood that the smart phone or tablet runs an appropriate app.

In an embodiment, the user information system may comprise an output device for providing user information to the user. The output device may be communicatively connected to the second communication interface. The output device may be a part of the vehicle, e.g. a display unit of the vehicle and/or a speaker unit of the vehicle. Alternatively, the output device may not form part of the vehicle, but may be communicatively connected to the vehicle. In the latter case, the output device may be a mobile electronic device such as a smart phone or a tablet. It is understood that the smart phone or tablet runs an appropriate app. In all alternatives, the output device provides a comfortable way of better understanding the functioning of the driver assistance system. This leads to an improved, especially safe, driving behavior.

In an embodiment, the feedback input device and the output device are realized by a combined input/output device. A touch display, be it integrated into the vehicle or part of a mobile electronic device, may form part of such a combined feedback input device and output device. The combined input/output device is compact.

In an embodiment, the user information system may comprise an event history storage unit for storing event history data received via the first communication interface. Thus, user information can be generated in connection with stored event history data. The user can thus be informed about a plurality of past events.

In an embodiment, the event history storage unit may be communicatively connected to a developer interface for reading out the event history storage unit. Thus, developers for driver assistance systems can use the event history data when developing further improved driver assistance systems.

According to the subject-matter of the independent claim 8, there is provided a driver assistance module comprising a driver assistance system for a vehicle. The driver assistance system comprises an assistance computation unit for generating driver assistance events and a fourth communication interface being communicatively connected to the assistance computation unit and being configured for providing event history data to a user information system. Additionally, the driver assistance module comprises a user information system according to the present invention, wherein the user information system and the driver assistance system are communicatively connected via the first communication interface of the user information system and the fourth communication interface of the driver assistance system. Such a module is capable of realizing the effects and advantages that have been mentioned in connection with the user information system and the driver assistance system. It is noted that the designation of the communication interface as a fourth communication interface is done for the ease of explanation and for distinguishing the communication interfaces described in connection with the present invention. A number of communication interfaces is not implied. Such a drive assistance system is configured for cooperating with a user information system as has been described above. Thus, the confidence of a driver in the driver assistance system can be increased which has a positive effect on the driving behavior and the overall driving security.

In an embodiment, the driver assistance system may comprise an event history storage unit for storing event history data. The event history storage unit may be communicatively connected to the assistance computation unit or may form part of the assistance computation unit. Thus, events from the past are still available for being used by a user information system for generating a corresponding user information. The user can thus be informed about a plurality of past events.

In an embodiment, the event history storage unit may be communicatively connected to a developer interface for reading out the event history storage unit. Thus, developers for driver assistance systems can use the event history data when developing further improved driver assistance systems.

In an embodiment, the driver assistance system may comprise a personalization interface being communicatively connected to the assistance computation unit and being configured for receiving a personalization input modifying driver assistance events being generated by the assistance computation unit. Thus, settings of the driver assistance system can be adapted to the preferences of a user. Consequently, the driver assistance system can provide the most appropriate assistance to the driver.

In an example, the driver assistance system is one of a collision warning system, a braking assistance system, an autonomous emergency braking system, an evasive manoeuver assist system, a lane keeping assistance system, a lane departure warning system, an emergency lane keeping system, and an autonomous driving system. The driver assistance system may also be a driver alert system, i.e. a system which alerts and/or assists drivers whose driving ability is deteriorating or who are inadvertently leaving the lane they are driving on or who are inadvertently on a collision course towards other objects, humans and/or animals. In a further alternative, the driver assistance system may be a pilot assist system, i.e. a system which can help the driver to maintain a constant speed, combined with a preselected time interval to the vehicle ahead and may also help the driver to drive the car between the lane's lane markings. Generally speaking, the driver assistance system is a driver support system supporting the driver in specific situations or a system providing an automated driving functionality.

According to the subject-matter of the independent claim 12, there is provided a method for providing a user information about a driver assistance system of a vehicle to a user of the vehicle. The method comprises:
- receiving event history data from the driver assistance system,
- generating a user information based on the event history data, wherein the user information comprises at least one of a name of the driver assistance system that has been used, a time and date when the driver assistance system has been used, and a list of one or more conditions that have been met for triggering the driver assistance system, and
- providing the user information to the user, wherein the user information is provided only after the event has occurred.

Thus, a user may be well informed about the interventions of the driver assistance system and the reasons that have led to the intervention. This improves driving safety.

In an embodiment, the user information comprises at least one of an explanation on the functioning of the driver assistance system, and a statistical information on the use of the driver assistance system. Thus a user is in a position to well understand an intervention of a driver assistance system.

In an embodiment, the method may comprise receiving user feedback from the user. This user feedback can be used for improving the driver assistance system.

In an embodiment, the method is only performed if the vehicle is at a standstill and/or an engine of the vehicle is turned off

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

It should be noted that the above embodiments may be combined with each other irrespective of the aspect involved.

These and other aspects of the present invention will become apparent from and elucidated with reference to the embodiments described hereinafter.

Embodiments of the invention will be described in the following with reference to the following drawings.
- Fig. 1: shows a driver assistance module according to the present invention, comprising a user information system according to the present invention and a driver assistance system according to the present invention, and
- Fig. 2: illustrates a method according to the present invention for providing a user information about a driver assistance system of a vehicle to a user of the vehicle.

The figures are merely schematic representations and serve only to illustrate embodiments of the invention. Identical or equivalent elements are in principle provided with the same reference signs.

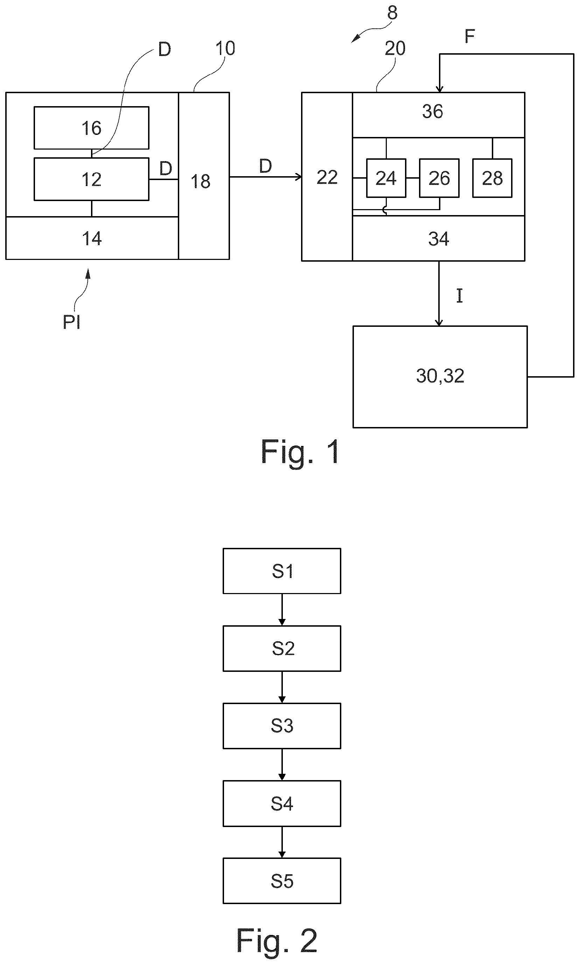

Figure 1 shows a driver assistance module 8 having a driver assistance system 10 for a vehicle.

The driver assistance system 10 can be any of a collision warning system, a braking assistance system, an autonomous emergency braking system, an evasive manoeuver assist system, a lane keeping assistance system, a lane departure warning system, an emergency lane keeping system, and an autonomous driving system.

The driver assistance system 10 comprises an assistance computation unit 12 for generating driver assistance events. This means that the assistance computation unit 12 is configured for triggering an action of a corresponding system of the vehicle.

Of course, this depends on the type of driver assistance system 10 used. In a case in which the driver assistance system 10 is a collision warning system, a warning message is triggered. In a case in which the driver assistance system 10 is a braking assistance system or an autonomous emergency braking system, a braking event is triggered. In a case in which the driver assistance system 10 is an evasive manoeuver assist system, a corresponding operation of a steering system is triggered. The same is true if the driver assistance system 10 is a lane keeping assistance system or an emergency lane keeping system. In a case in which the driver assistance system 10 is a lane departure warning system, a warning message is triggered. If the driver assistance system 10 is an autonomous driving system, an acceleration, deceleration and/or steering activity is triggered.

The driver assistance system 10 can be personalized, i.e. settings of the driver assistance system 10 can be chosen as a function of the preferences of a user.

To this end, the driver assistance system 10 comprises a personalization interface 14 which is communicatively connected to the assistance computation unit 12. The personalization interface is configured for receiving a personalization input PI modifying driver assistance events being generated by the assistance computation unit 12.

The driver assistance system 10 also has an event history storage unit 16 for storing event history data. The event history storage unit 16 is communicatively connected to the assistance computation unit 12. Alternatively, the event history storage unit 16 forms part of the assistance computation unit 12, i.e. the event history storage unit 16 and the assistance computation unit 12 are formed by a single unit.

The driver assistance system 10 also comprises a communication interface which will be designated as a fourth communication interface 18.

The fourth communication interface 18 is communicatively connected to the assistance computation unit 12 and is configured for providing event history data D to a user information system 20 as will be explained in the following.

Also the user information system 20 forms part of the driver assistance module 8.

The user information system 20 comprises a first communication interface 22.

The first communication interface 22 is configured for receiving event history data D from the driver assistance system 10, more precisely from the assistance computation unit 12.

To this end, the first communication interface 22 is communicatively connected to the fourth communication interface 18.

The user information system 20 also comprises a user information generation unit 24. The user information generation unit 24 is communicatively connected to the first communication interface 22 and is configured for generating a user information I based on the event history data D received via the first communication interface 22.

The user information system 20 additionally comprises an event history storage unit 26 for storing event history data D received via the first communication interface 22.

Thus, the event history storage unit 26 is communicatively connected to the first communication interface 22.

Moreover, the event history storage unit 26 is communicatively connected to the user information generation unit 24 such that the user information generation unit 24 is able to generate a user information I based on the event history data D stored on the event history storage unit 26.

The user information system 20 also has a feedback storage unit 28 for storing user feedback F. The user feedback F is provided by the user and concerns a specific user information I.

Furthermore, the user information system 20 comprises a feedback input device 30 and output device 32 which are realized as a combined input/output device.

In the following, the combined input/output device will be designated as a combined feedback input device 30 and output device 32.

In the present embodiment the combined feedback input device 30 and output device 32 comprises a touch screen which forms part of a central information unit of the vehicle. In an alternative which is not shown in the figures, the combined feedback input device 30 and output device 32 is a mobile electronic device, e.g. a smart phone, running an appropriate app.

The combined feedback input device 30 and output device 32 is communicatively connected to a second communication interface 34 of the user information system 20.

The second communication interface 34 is also communicatively connected to the user information generation unit 24. Thus, the user information I being generated by the user information generation unit 24 can be communicated to the combined feedback input device 30 and output device 32.

The combined feedback input device 30 and output device 32 is additionally communicatively connected to a third communication interface 36 of the user information system 20.

Also, the third communication interface 36 is communicatively connected to the user information generation unit 24 and is configured for receiving a user feedback F from the combined feedback input device 30 and output device 32.

Moreover, the feedback storage unit 28 is communicatively connected to the third communication interface 36 such that a user feedback F received via the third communication interface 36 can be stored on the feedback storage unit 28.

The user information system 20 of the driver assistance system 10 can be used for performing a method for providing a user information I about a driver assistance system 10 of the vehicle to a user of the vehicle. This is illustrated in Figure 2.

In a first step S 1 of the method, event history data D is received from the driver assistance system 10.

This event history data D is transferred from the assistance computation unit 12 via the fourth communication interface 18 and first communication interface 22 to the user information generation unit 24.

Subsequently, in a second step S2 of the method, a user information I is generated based on the received event history data D. In the present embodiment this is done by selecting elements of the event history data D that are used as user information I.

This method step may be performed by the user information generation unit 24.

Then, in a third step S3, the generated user information I is provided to the user.

This is done via the combined feedback input device 30 and output device 32.

The user information I may comprise at least one of a name of the driver assistance system 10 that has been used, a date and time at which the driver assistance system 10 has been used, a list of one or more conditions that have been met for triggering the driver assistance system 10, an explanation on the functioning of the driver assistance system 10, and a statistical information on the use of the driver assistance system 10.

In a case in which more than one of the above elements form part of the user information I, the method may comprises a step of asking the user whether he or she wishes to see more user information. The next element of user information is only provided to the user if he or she wishes so. Otherwise, the method is abandoned.

The method may also comprise a fourth step S4, which comprises the reception of user feedback F from the user. This user feedback F is connected to the user information I and the event history data D which has been used for generating the user information I.

Of course, it is possible that prior to the performance of the fourth step S4, the user may be asked whether he or she is willing to provide user feedback F. The fourth step S4 is only performed in the positive case. Otherwise, the method may be abandoned.

In the embodiment shown in the figures, the method also comprises a fifth step S5.

In this step, the user is asked whether he or she wishes to personalize the driver assistance system 10 which has produced the event history data D which has formed the basis of a user information I.

In a positive case, the user can provide a personalization input PI or individual setting for the driver assistance system 10. This is done via the personalization interface 14.

It is also possible that during the performance of the fifth step S5, the user has the option to receive an explanation on how to provide a personalization input, e.g. by consulting a user manual.

The performance of the method may be subject to a triggering event, e.g. the user performing an action to start the method. This may for example be done by opening a corresponding menu in an information system of the vehicle.

Moreover, the performance of the method may be subject to the condition that the vehicle is at a standstill.

Other variations to the disclosed embodiments can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 8: driver assistance module
- 10: driver assistance system
- 12: assistance computation unit
- 14: personalization interface
- 16: event history storage unit
- 18: fourth communication interface
- 20: user information system
- 22: first communication interface
- 24: user information generation unit
- 26: event history storage unit
- 28: feedback storage unit
- 30: feedback input device
- 32: output device
- 34: second communication interface
- 36: third communication interface

- D: event history data
- F: user feedback
- I: user information
- PI: personalization input
- S1: first step
- S2: second step
- S3: third step
- S4: fourth step
- S5: fifth step

## Claims

1. A user information system (20) for informing a user about past interventions of a driver assistance system (10) of a vehicle, comprising
- a first communication interface (22) being configured for receiving event history data (D) from the driver assistance system (10),
- a user information generation unit (24) being communicatively connected to the first communication interface (22) and being configured for generating a user information (I) based on the event history data (D) received via the first communication interface (22), wherein the user information (I) comprises at least one of a name of the driver assistance system that has been used, a time and date when the driver assistance system has been used, and a list of one or more conditions that have been met for triggering the driver assistance system, and
- a second communication interface (34) being communicatively connected to the user information generation unit (24) and being configured for providing the user information (I) to a user or to an output device (32), wherein the user information (I) is provided only after the event has occurred.

2. The user information system (20) of claim 1, comprising a third communication interface (36) being communicatively connected to the user information generation unit (24) and being configured for receiving a user feedback (F).

3. The user information system (20) of claim 2, comprising a feedback storage unit (28) for storing user feedback (F) received via the third communication interface (36).

4. The user information system (20) of claim 2 or 3, comprising a user feedback input device (30) being communicatively connected to the third communication interface (36).

5. The user information system (20) of any one of the preceding claims, comprising an output device (32) for providing user information (I) to the user, the output device (32) being communicatively connected to the second communication interface (34).

6. The user information system (20) of claims 4 and 5, wherein the feedback input device (30) and the output device (32) are realized by a combined input/output device.

7. The user information system (20) of any one of the preceding claims, comprising an event history storage unit (26) for storing event history data (D) received via the first communication interface (22).

8. A driver assistance module (8) comprising
a driver assistance system (10) for a vehicle, comprising
- an assistance computation unit (12) for generating driver assistance events, and
- a fourth communication interface (18) being communicatively connected to the assistance computation unit (12) and being configured for providing event history data (D) to a user information system (20), and
a user information system (20) of any one claims 1 to 7,
wherein the user information system (20) and the driver assistance system (10) are communicatively connected via the first communication interface (22) of the user information system (20) and the fourth communication interface (18) of the driver assistance system (10).

9. The driver assistance module (8) of claim 8, wherein the driver assistance system (10) comprises an event history storage unit (16) for storing event history data (D), the event history storage unit (16) being communicatively connected to the assistance computation unit (12) or forming part of the assistance computation unit (12).

10. The driver assistance module (8) of claim 8 or 9, wherein the driver assistance system (10) comprises a personalization interface (14) being communicatively connected to the assistance computation unit (12) and being configured for receiving a personalization input (PI) modifying driver assistance events being generated by the assistance computation unit (12).

11. The driver assistance module (8) of any one of claims 8 to 10, wherein the driver assistance system (10) is one of a collision warning system, a braking assistance system, an autonomous emergency braking system, an evasive manoeuver assist system, a lane keeping assistance system, a lane departure warning system, an emergency lane keeping system, and an autonomous driving system.

12. A method for providing a user information (I) about past interventions of a driver assistance system (10) of a vehicle to a user of the vehicle, comprising:
- receiving event history data (D) from the driver assistance system (10) (S1),
- generating a user information (I) based on the event history data (D) (S2), wherein the user information (I) comprises at least one of a name of the driver assistance system that has been used, a time and date when the driver assistance system has been used, and a list of one or more conditions that have been met for triggering the driver assistance system, and
- providing the user information (I) to the user, wherein the user information (I) is provided only after the event has occurred (S3).

13. The method of claim 12, wherein the user information (I) comprises at least one of
- an explanation on the functioning of the driver assistance system, and
- a statistical information on the use of the driver assistance system.

14. The method of claim 12 or 13, comprising: receiving user feedback (F) from the user.

## Patentansprüche

1. Benutzerinformationssystem (20) zum Informieren eines Benutzers über frühere Eingriffe eines Fahrerassistenzsystems (10) eines Fahrzeugs, umfassend:
- eine erste Kommunikationsschnittstelle (22), die zum Empfangen von Ereignisverlaufsdaten (D) von dem Fahrerassistenzsystem (10) eingerichtet ist,
- eine Benutzerinformations-Generierungseinheit (24), die kommunikativ mit der ersten Kommunikationsschnittstelle (22) verbunden ist und zum Generieren einer Benutzerinformation (I) auf der Grundlage der über die erste Kommunikationsschnittstelle (22) empfangenen Ereignisverlaufsdaten (D) eingerichtet ist, wobei die Benutzerinformation (I) mindestens eines von einem Namen des Fahrerassistenzsystems, das verwendet wurde, einer Uhrzeit und einem Datum, wann das Fahrerassistenzsystem verwendet wurde, und einer Liste einer oder mehrerer Bedingungen, die zum Auslösen des Fahrerassistenzsystems erfüllt wurden, umfasst, und
- eine zweite Kommunikationsschnittstelle (34), die kommunikativ mit der Benutzerinformations-Generierungseinheit (24) verbunden ist und dazu eingerichtet ist, die Benutzerinformation (I) an einen Benutzer oder an eine Ausgabevorrichtung (32) zu übermitteln, wobei die Benutzerinformation (I) erst übermittelt wird, nachdem das Ereignis stattgefunden hat.

2. Benutzerinformationssystem (20) nach Anspruch 1, umfassend eine dritte Kommunikationsschnittstelle (36), die kommunikativ mit der Benutzerinformations-Generierungseinheit (24) verbunden ist und zum Empfangen einer Benutzerrückmeldung (F) eingerichtet ist.

3. Benutzerinformationssystem (20) nach Anspruch 2, umfassend eine Rückmeldungsspeichereinheit (28) zum Speichern einer über die dritte Kommunikationsschnittstelle (36) empfangenen Benutzerrückmeldung (F).

4. Benutzerinformationssystem (20) nach Anspruch 2 oder 3, umfassend eine Benutzerrückmeldungs-Eingabevorrichtung (30), die kommunikativ mit der dritten Kommunikationsschnittstelle (36) verbunden ist.

5. Benutzerinformationssystem (20) nach einem der vorangehenden Ansprüche, umfassend eine Ausgabevorrichtung (32) zum Übermitteln von Benutzerinformationen (I) an den Benutzer, wobei die Ausgabevorrichtung (32) kommunikativ mit der zweiten Kommunikationsschnittstelle (34) verbunden ist.

6. Benutzerinformationssystem (20) nach den Ansprüchen 4 und 5, wobei die Rückmeldungs-Eingabevorrichtung (30) und die Ausgabevorrichtung (32) durch eine kombinierte Eingabe-/Ausgabevorrichtung realisiert sind.

7. Benutzerinformationssystem (20) nach einem der vorangehenden Ansprüche, umfassend eine Ereignisverlaufsspeichereinheit (26) zum Speichern von über die erste Kommunikationsschnittstelle (22) empfangenen Ereignisverlaufsdaten (D).

8. Fahrerassistenzmodul (8), umfassend
ein Fahrerassistenzsystem (10) für ein Fahrzeug, umfassend
- eine Assistenzberechnungseinheit (12) zum Generieren von Fahrerassistenzereignissen und
- eine vierte Kommunikationsschnittstelle (18), die kommunikativ mit der Assistenzberechnungseinheit (12) verbunden ist und dazu eingerichtet ist, Ereignisverlaufsdaten (D) an ein Benutzerinformationssystem (20) zu übermitteln, und
ein Benutzerinformationssystem (20) nach einem der Ansprüche 1 bis 7,
wobei das Benutzerinformationssystem (20) und das Fahrerassistenzsystem (10) über die erste Kommunikationsschnittstelle (22) des Benutzerinformationssystems (20) und die vierte Kommunikationsschnittstelle (18) des Fahrerassistenzsystems (10) kommunikativ verbunden sind.

9. Fahrerassistenzmodul (8) nach Anspruch 8, wobei das Fahrerassistenzsystem (10) eine Ereignisverlaufsspeichereinheit (16) zum Speichern von Ereignisverlaufsdaten (D) umfasst, wobei die Ereignisverlaufsspeichereinheit (16) kommunikativ mit der Assistenzberechnungseinheit (12) verbunden ist oder einen Teil der Assistenzberechnungseinheit (12) bildet.

10. Fahrerassistenzmodul (8) nach Anspruch 8 oder 9, wobei das Fahrerassistenzsystem (10) eine Personalisierungsschnittstelle (14) umfasst, die kommunikativ mit der Assistenzberechnungseinheit (12) verbunden ist und dazu eingerichtet ist, eine Personalisierungseingabe (PI) zu empfangen, die Fahrerassistenzereignisse modifiziert, die durch die Assistenzberechnungseinheit (12) generiert werden.

11. Fahrerassistenzmodul (8) nach einem der Ansprüche 8 bis 10, wobei das Fahrerassistenzsystem (10) eines von einem Kollisionswarnsystem, einem Bremsassistenzsystem, einem autonomen Notbremssystem, einem Ausweichmanöver-Assistenzsystem, einem Spurhalte-Assistenzsystem, einem Spurverlassens-Warnsystem, einem Notspurhaltesystem und einem autonomen Fahrsystem ist.

12. Verfahren zum Übermitteln einer Benutzerinformation (I) über frühere Eingriffe eines Fahrerassistenzsystems (10) eines Fahrzeugs an einen Benutzer des Fahrzeugs, umfassend:
- Empfangen von Ereignisverlaufsdaten (D) von dem Fahrerassistenzsystem (10) (S1),
- Generieren einer Benutzerinformation (I) auf der Grundlage der Ereignisverlaufsdaten (D) (S2), wobei die Benutzerinformation (I) mindestens eines von einem Namen des Fahrerassistenzsystems, das verwendet wurde, einer Uhrzeit und einem Datum, wann das Fahrerassistenzsystem verwendet wurde, und einer Liste einer oder mehrerer Bedingungen, die zum Auslösen des Fahrerassistenzsystems erfüllt wurden, umfasst, und
- Übermitteln der Benutzerinformation (I) an den Benutzer, wobei die Benutzerinformation (I) erst übermittelt wird, nachdem das Ereignis stattgefunden hat (S3).

13. Verfahren nach Anspruch 12, wobei die Benutzerinformation (I) mindestens eines von Folgendem umfasst:
- eine Erklärung zur Funktionsweise des Fahrerassistenzsystems und
- eine statistische Information über die Nutzung des Fahrerassistenzsystems.

14. Verfahren nach Anspruch 12 oder 13, umfassend: Empfangen einer Benutzerrückmeldung (F) von dem Benutzer.

## Revendications

1. Système d'informations d'utilisateur (20) pour informer un utilisateur à propos d'interventions passées d'un système d'aide à la conduite (10) d'un véhicule, comprenant
- une première interface de communication (22) configurée pour recevoir des données d'historique d'événements (D) à partir du système d'aide à la conduite (10),
- une unité de génération d'informations d'utilisateur (24) reliée en communication à la première interface de communication (22) et configurée pour générer des informations d'utilisateur (I) sur la base des données d'historique d'événements (D) reçues par l'intermédiaire de la première interface de communication (22), dans lequel les informations d'utilisateur (I) comprennent au moins l'un parmi un nom du système d'aide à la conduite qui a été utilisé, une heure et une date auxquelles le système d'aide à la conduite a été utilisé, et/ou une liste d'une ou plusieurs conditions qui ont été remplies pour le déclenchement le système d'aide à la conduite, et
- une deuxième interface de communication (34) reliée en communication à l'unité de génération d'informations d'utilisateur (24) et configurée pour fournir les informations d'utilisateur (I) à un utilisateur ou à un dispositif de sortie (32), dans lequel les informations d'utilisateur (I) sont fournies seulement après que l'événement s'est produit.

2. Système d'informations d'utilisateur (20) selon la revendication 1, comprenant une troisième interface de communication (36) reliée en communication à l'unité de génération d'informations d'utilisateur (24) et configurée pour recevoir une rétroaction d'utilisateur (F).

3. Système d'informations d'utilisateur (20) selon la revendication 2, comprenant une unité de stockage de rétroactions (28) pour stocker les rétroactions d'utilisateur (F) reçues par l'intermédiaire de la troisième interface de communication (36).

4. Système d'informations d'utilisateur (20) selon la revendication 2 ou 3, comprenant un dispositif d'entrée de rétroaction d'utilisateur (30) relié en communication à la troisième interface de communication (36).

5. Système d'informations d'utilisateur (20) selon l'une quelconque des revendications précédentes, comprenant un dispositif de sortie (32) pour fournir des informations d'utilisateur (I) à l'utilisateur, le dispositif de sortie (32) étant relié en communication à la deuxième interface de communication (34).

6. Système d'informations d'utilisateur (20) selon les revendications 4 et 5, dans lequel le dispositif d'entrée de rétroaction (30) et le dispositif de sortie (32) sont réalisés par un dispositif d'entrée/sortie combiné.

7. Système d'informations d'utilisateur (20) selon l'une quelconque des revendications précédentes, comprenant une unité de stockage d'historique d'événements (26) pour stocker des données d'historique d'événements (D) reçues par l'intermédiaire de la première interface de communication (22).

8. Module d'aide à la conduite (8) comprenant
un système d'aide à la conduite (10) pour un véhicule, comprenant
- une unité de calcul d'aide (12) pour générer des événements d'aide à la conduite, et
- une quatrième interface de communication (18) reliée en communication à l'unité de calcul d'aide (12) et configurée pour fournir des données d'historique d'événements (D) à un système d'informations d'utilisateur (20), et
un système d'informations d'utilisateur (20) selon l'une quelconque des revendications 1 à 7,
dans lequel le système d'informations d'utilisateur (20) et le système d'aide à la conduite (10) sont reliés en communication par l'intermédiaire de la première interface de communication (22) du système d'informations d'utilisateur (20) et de la quatrième interface de communication (18) du système d'aide à la conduite (10).

9. Module d'aide à la conduite (8) selon la revendication 8, dans lequel le système d'aide à la conduite (10) comprend une unité de stockage d'historique d'événements (16) pour stocker des données d'historique d'événements (D), l'unité de stockage d'historique d'événements (16) étant reliée en communication à l'unité de calcul d'aide (12) ou faisant partie de l'unité de calcul d'aide (12).

10. Module d'aide à la conduite (8) selon la revendication 8 ou 9, dans lequel le système d'aide à la conduite (10) comprend une interface de personnalisation (14) reliée en communication à l'unité de calcul d'aide (12) et configurée pour recevoir une entrée de personnalisation (PI) modifiant des événements d'aide à la conduite générés par l'unité de calcul d'aide (12).

11. Module d'aide à la conduite (8) selon l'une quelconque des revendications 8 à 10, dans lequel le système d'aide à la conduite (10) est l'un parmi un système d'avertissement de collision, un système d'aide au freinage, un système de freinage d'urgence autonome, un système d'aide aux manoeuvres d'évitement, un système d'aide au maintien de voie, un système d'avertissement de sortie de voie, un système de maintien de voie d'urgence, et un système de conduite autonome.

12. Procédé permettant de fournir des informations d'utilisateur (I) à propos d'interventions passées d'un système d'aide à la conduite (10) d'un véhicule à un utilisateur du véhicule, comprenant :
- la réception de données d'historique d'événements (D) à partir du système d'aide à la conduite (10) (S1),
- la génération d'informations d'utilisateur (I) sur la base des données d'historique d'événements (D) (S2), dans lequel les informations d'utilisateur (I) comprennent au moins l'un parmi un nom du système d'aide à la conduite qui a été utilisé, une heure et une date auxquelles le système d'aide à la conduite a été utilisé, et une liste d'une ou plusieurs conditions qui ont été remplies pour déclencher le système d'aide à la conduite, et
- la fourniture des informations d'utilisateur (I) à l'utilisateur, dans lequel les informations d'utilisateur (I) sont fournies seulement après que l'événement s'est produit (S3).

13. Procédé selon la revendication 12, dans lequel les informations d'utilisateur (I) comprennent au moins l'un parmi
- une explication sur le fonctionnement du système d'aide à la conduite, et
- des informations statistiques sur l'utilisation du système d'aide à la conduite.

14. Procédé selon la revendication 12 ou 13, comprenant : la réception d'une rétroaction d'utilisateur (F) à partir de l'utilisateur.
